# EUROPEAN PATENT SPECIFICATION

(11) **EP 0 445 685 B1**
(45) Date of publication and mention of the grant of the patent: **29.06.1994**
(21) Application number: 91103190.4
(22) Date of filing: 04.03.1991
(51) Int. Cl.: E06B 3/46, B60J 1/16

(54) **Sliding window or door**
Schiebefenster oder -tür
Fenêtre ou porte coulissante

(30) Priority: 07.03.1990 GB 9005134
(43) Date of publication of application: 11.09.1991
(73) Proprietor: HEYWOOD WILLIAMS LIMITED, Huddersfield, West Yorkshire HD3 3AR (GB)
(72) Inventor: Humphries, Robert John, Sutton Coldfield, West Midlands (GB); Dolman, Terry James, Sutton Coldfield, West Midlands B76 8MJ (GB)
(74) Representative: Brierley, Anthony Paul

(56) References cited:
- DE-C- 449 258
- FR-A- 2 558 885
- GB-A- 965 287
- GB-A- 2 212 846
- US-A- 2 283 009

## Description

The present invention relates to a window or door assembly comprising a frame and first and second panels supported in the frame, wherein at least one of said panels is movable relative to the frame between open and closed positions and in which the frame provides a track along which the movable panel can be drawn between its open and closed positions. The panels or one of them may be formed of a glazing material, for example a transparent sheet material. Window assemblies of this kind are commonly provided in vehicles and are usually called sliding windows.

In a known example of sliding window in a vehicle, the frame has a pair of channels which receive marginal portions of respective ones of the panels. Generally, a channel which is nearer to the outside of the vehicle receives a fixed panel and a channel which is nearer to the inside of the vehicle receives the sliding panel. This known arrangement suffers from a number of disadvantages. When the window is closed, there is exposed at the outside of the sliding panel a vacant channel in which water and solid matter can collect. The sliding panel is usually inset with respect to the external surface of the vehicle body surrounding the window and this gives rise to aerodynamic drag and to noise, when the vehicle is in use. The appearance of this known kind of window is impaired by the fact that the sliding panel is inset with respect to the external surface of the vehicle body adjacent to the window, to the window frame and to the fixed panel.

GB-2212846A discloses a sliding window assembly having a frame and window panes supported in the frame, one of the panes being movable between open and closed positions. The frame provides a track along which the movable pane can be moved between its positions, the track including the portions which extend transversely of each other. Runners which engage the track are constituted by lugs fitted directly and secured by fasteners to the movable pane. Such direct securement of the runners to the pane is an expensive constructural technique, requiring precision in manufacture if the pane is to move freely but without misalignment or rattling.

DE-C-449258 discloses a window arrangement for car doors, in which a slidable glass panel sits in a holder which has an extension guided for sliding movement relatively to a guide rail. In this construction also, precision of manufacture is required because any inaccuracies may have the result that the sliding movement of the pane is not constrained. Further, there is the possibility of relative movement between pane and holder.

It is broadly the object of the present invention to provide a sliding window of improved construction.

According to the present invention, the frame of a window or door assembly comprises a frame; first and second panels supported in the frame, at least one of said panels being movable relative to the frame between open and closed positions; the frame providing a track along which the movable panel can be drawn between its open and closed positions; the track including respective portions which extend transversely of each other; and an elongated carrier extending along a margin of the movable panel, characterised in that said carrier is secured to the marginal portion of said movable panel by a bonding agent, and further characterised by a plurality of runners fitted to the carrier, each runner projecting from the panel and the carrier into a channel provided by the track.

It is unnecessary for the movable panel of a window embodying the present invention to be inset, when in its closed position, relative to a fixed panel of the window and relative to an adjacent external surface of a body of a vehicle. The track can be arranged to guide the movable panel inwardly of the vehicle when the panel is moved from its closed position and then to guide the panel for movement along a path which is substantially parallel to a fixed panel of the window into partly overlapping relation with that fixed panel. Furthermore, since the runners are able to cooperate with the channel of the track to guide the movable panel, the carrier can be spaced somewhat from the track so that there is no risk of friction between the carrier and the track impeding movement of the movable panel.

The carrier is preferably of U-section to embrace the marginal portion of the panel, while the runners close openings in the carrier to ensure that the bonding agent cannot be squeezed out of the interface between the edge of the panel and the carrier.

That portion of each of the runners which enters the channel of the track is preferably hollow, by which we mean that there is in the runner a space which can be contracted by deformation of the runner. This arrangement enables the runner to deform according to variations in the width of the channel, without excessive friction between the runner and the track occurring. It will be understood, that in a case where the window or door assembly is installed in a vehicle, moderate friction may be desirable to impede movement of the movable panel relative to the track during acceleration of and deceleration of the vehicle, without preventing movement of the panel when an occupant of the vehicle wishes to close or open the window.

Other important features of the invention will have their significance particularly pointed out hereafter in the following description with reference to the drawings.

An example of a window embodying the present invention will now be described, with reference to the accompanying drawings, wherein:
FIGURE 1 shows a front elevation of the window with certain parts being broken away,
FIGURE 2 shows on an enlarged scale a partial cross section on the line II-II of Figure 1,
FIGURE 3 shows on the scale of Figure 2 a partial cross section on the line III-III of Figure 1
FIGURE 4 shows certain parts of the window, as viewed in the direction of the arrow IV in Figure 1, and
FIGURE 5 is an enlargement of part of Figure 2.

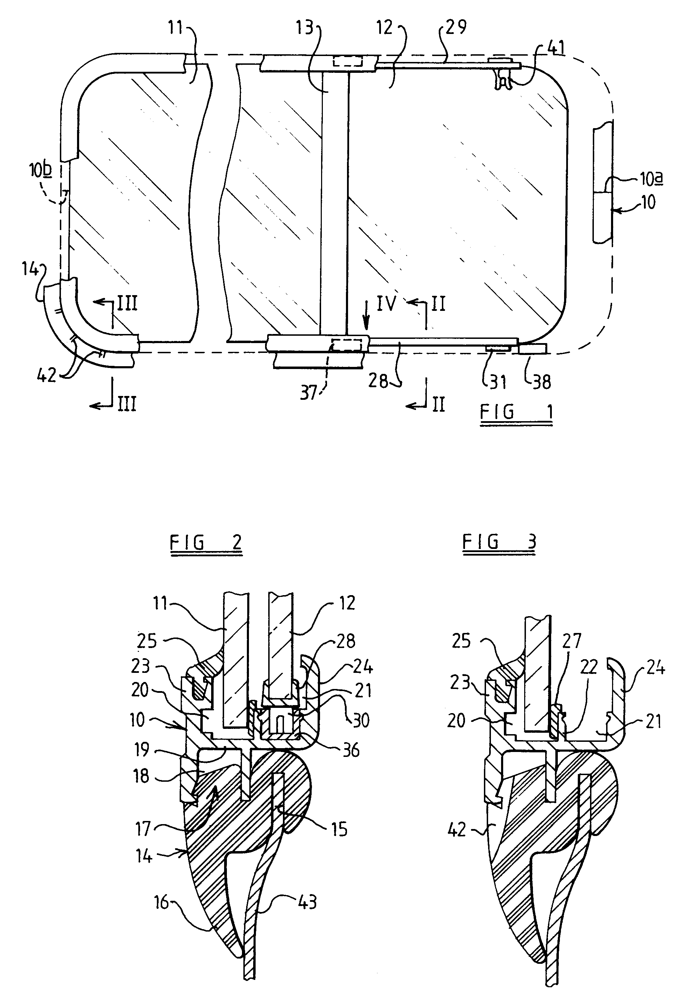

The window illustrated in the accompanying drawings comprises a frame 10 containing a plurality of panels of glazing material. In the example illustrated, the frame 10 is generally rectangular, as viewed in front elevation, having rounded corners and substantially rectilinear parts extending between the corners. The example of the window illustrated has two panels of glazing material, one of these being fixed with respect to the frame 10 and identified by the reference numeral 11 and the other being movable relative to the frame 10 and identified by the reference numeral 12. In Figures 1 and 2, the panel 12 is shown in a partly open position. A rectilinear glazing bar 13 extends along one edge of the fixed panel 11.

The frame illustrated in the accompanying drawings is intended for mounting in an aperture cut in a body panel of a vehicle. For mounting the frame in the opening of the body panel, there is provided an elastomeric gasket 14. The gasket completely surrounds the frame 10 and typically comprises moulded corner portions, between which there extend extruded portions which fit corresponding rectilinear portions of the frame 10. Since the gasket is formed by moulding corner portions onto the ends of extruded portions, the gasket can conveniently be formed as an endless loop. The gasket has a slot 15 to receive a marginal portion of the vehicle body panel 43 and a flange 16 which overlaps with an adjacent portion of the body panel and which lies at the outside of the vehicle body.

The frame 10 has formations which cooperate with the gasket 14 to maintain a predetermined positional relation between the gasket and the frame. In the particular example illustrated, the frame defines a peripheral channel 17 which is open at the periphery of the frame and which receives a portion of the gasket. At least one wall of the channel 17 is undercut and the gasket is shaped to enter the undercut portion of the channel. It will be noted that the gasket does not fully occupy the channel 17. The gasket extends between and engages opposite sides walls of the channel 17 but is spaced by a gap 18 from a web 19 of the frame which extends between the side walls of the channel. The gap 18 preferably extends around the entire circumference of the frame.

At the face of the web 19 which is remote from the peripheral channel 17, the frame defines a pair of channels 20 and 21 which are divided one from the other by a rib 22 of the frame. In a case where the window is incorporated in the body of a vehicle, the channel 20 lies nearer to a space outside the vehicle and the channel 21 lies nearer to a space inside the vehicle. Accordingly, the channel 20 will hereinafter be referred to as the outer channel and the channel 21 will hereinafter be referred to as the inner channel. The web 19 forms a base to each of the channels 20 and 21.

The channels 20 and 21 collectively lie between an outer wall 23 and an inner wall 24 of the frame. As shown, these walls extend somewhat further from the web 19 than does the rib 22. The outer wall 23 includes a recess which receives a part of an elongated seal 25. The seal extends, without interruption, around the entire frame 10. Alternatively, the seal may be interrupted at the glazing bar 13.

The frame 10 is formed of an extruded material, preferably an aluminium alloy. Whilst it would be within the scope of the invention to form the frame of a single extruded length, opposite ends of which are joined together, we prefer to form the frame of two substantially equal extruded lengths which meet at two positions 10a, 10b which are spaced apart horizontally. Thus, the upper rectilinear part of the frame is formed integrally with upper halves of end parts of the frame and a lower part of the frame is formed integrally with lower halves of end parts of the frame. The corners of the frame are formed by bending the extruded stock. Abutting ends of the frame components are secured at the positions 10a, 10b to each other in any convenient manner, for example by securing a plate in overlapping relation with both end portions. Such plate may be secured by rivets or other fasteners. Prior to joining of the components of the frame to each other, the ends of these components can be machined to achieve, within close tolerances, a required distance between upper and lower substantially rectilinear parts of the frame.

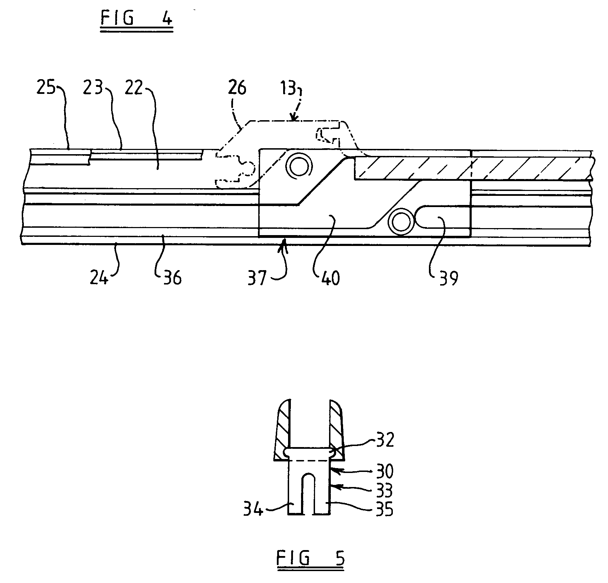

Marginal portions of the fixed glazing panel 11 are received in the outer channel 20 of one end part of the frame and of adjacent portions of the upper and lower parts of the frame. A further marginal portion of the fixed panel is received by the glazing bar 13 and is held in contact with the glazing bar by an elastomeric glazing bead 26 as seen in Figure 4. The seal 25 also bears on the outer face of the fixed panel 11. The seal 25 and the glazing bead 26 preferably have substantially the same appearance, as viewed from outside the vehicle body. Those parts of the rib 22 which overlap with the fixed panel 11 bear an elastomeric strip 27 which is interposed between the panel and the rib to provide a seal between the frame and the panel. The fixed panel 11 extends almost to the web 19 in the upper, end and lower parts of the frame. The fixed panel has two rounded corners which also approach closely to the web 19 of the frame in corners thereof.

The movable panel 12 has a shape similar to that of the fixed panel 11 but has a height somewhat less than that of the fixed panel. The height of the movable panel is somewhat less than the spacing between respective parts of the rib 22 which are included in the upper and lower parts of the frame.

A lower marginal portion of the movable panel 12 is received in a substantially rectilinear, elongated carrier 28 which has a "U"-shaped transverse cross section. Opposite side walls of the carrier bear on corresponding faces of the panel and a web of the carrier which extends between the side walls thereof lies adjacent to an edge of the panel. The carrier preferably extends along substantially the entire rectilinear lower margin of the panel. It will be understood that the panel has one curved, lower corner corresponding to a lower corner of the frame 10. A carrier 29 which may be identical with the carrier 28 is provided along an upper marginal portion of the movable panel 12.

The lower carrier 28 carries a pair of runners 30 and 31, each of which is short relative to the carrier, which are disposed adjacent to but spaced somewhat from opposite ends of the carrier. Each of the runners 30 and 31 has a respective head portion 32 which is received in an opening formed in the web of the carrier and a shank portion which projects from the carrier in a direction away from the panel 12. As shown in Figure 5, at least a part of the shank portion 33 which is spaced from the head portion 32 is hollow. Thus, the shank portion preferably comprises first and second limbs 34, 35, between which there is a space. These limbs are spaced from each other in a direction from the outer wall 23 towards the inner wall 24 of the frame. The limbs 34 and 35 extend towards the web 19 of the frame into overlapping relation with the rib 22, as viewed in front elevation.

There is provided in the inner channel 21 defined by the frame a lining 36 which has a "U"-shaped transverse cross section and which receives the limbs 34 and 35 of the runners 30 and 31. The lining is elongated, rectilinear and is formed in two separate parts. One of these is disposed in that part of the inner channel which corresponds approximately to the part of the outer channel 20 occupied by the fixed panel 11. The other part of the lining is spaced from the one part, in the lower part of the frame, by a first guide block 37. The guide block 37 lies between the outer and inner walls 23 and 24 of the frame at one end of the glazing bar 13. At the position occupied by the guide block 37, the rib 22 is cut away. A second guide block 38, which may be identical with the guide block 37, is disposed between the outer wall 23 and the inner wall 24 of the lower part of the frame 10 at a position adjacent to a bottom corner of the frame which is remote from the fixed panel 11. Again, the rib 22 is cut away to provide a gap in which the guide block 38 is received.

The transverse cross section of the lining 36 is uniform along the entire length of the lining. The transverse cross section of the guide block 37 is not uniform along the length of the guide block, its configuration being shown in Figure 4. The guide block is conveniently formed as a moulding of a plastics material. An end portion of the guide block 37 which is furthest from the fixed panel 11 is formed with a groove 39 which is aligned with and forms an extension of the groove defined by that part of the lining 36 which extends between the guide blocks 37 and 38. The groove 39 is rectilinear, relatively short and closed at its end remote from the guide block 38. The groove 39 is rectilinear.

There is also formed in the guide block 37 a non-rectilinear groove 40 which communicates with the groove defined by that part of the lining 36 which is adjacent to the fixed panel 11. This part of the lining and the guide block 37 together form a non-rectilinear track for receiving the runner 30. That portion of the track which is defined by the lining 36 is rectilinear. The guide block defines a part of the track which is transverse to the part of the track defined by the lining and extends from the inner channel 21 through the gap in the rib 22 to the outer channel 20.

The second guide block 38 has a non-rectilinear groove corresponding to the groove 40 and which provides a transverse part of a track for the runner 31, this transverse part of the track also leading from the inner channel 21 to the outer channel 20.

The upper part of the frame 10 is provided with a pair of guide blocks opposite and in mirror image of the guide blocks 37 and 38, and with a lining corresponding to the lining 36 so that non-rectilinear tracks are provided for runners corresponding to the runners 30 and 31 which are carried by a carrier corresponding to the carrier 28 and in which an upper marginal portion of the movable panel 12 is received.

When the movable panel 12 is in the closed position the outer face of the movable panel is substantially co-planar with the outer face of the fixed panel 11. The runner 30 occupies a part of the groove 40 of the first guide block 37 which is offset from the lining 36 and is aligned with the outer channel 20. The runner 31 occupies a corresponding part of the non-rectilinear groove of the second guide block 38. The outside face of the movable panel 12 bears on the seal 25 mounted on the outer wall 23 of the frame and on a corresponding seal provided on the glazing bar 13. It will be noted that the guide blocks engage the runners 30 and 31 to prevent movement of these runners and of the movable panel in a direction from the space outside the vehicle body to the space inside the vehicle body, without movement of the panel 12 along the frame 10 occurring. A handle and latch assembly 41 may be provided on the movable panel 12 for cooperation with the upper part of the frame 10 to restrain movement of the panel 12 along the frame. The handle and latch assembly may be constructed in a known manner and may be bonded to the movable panel.

When the latch 41 is released, the movable panel 12 can be drawn along the tracks defined by the frame 10 towards an open position. The initial movement is in a direction parallel to the outside faces of the panels 11 and 12. This movement involves sliding on the seal 25 without relieving the pressure on that seal. This movement is, however, short. Once the runner 30 reaches the transverse portion on the groove 40, the other runners associated with the panel 12 also reach the transverse portions of the grooves in the other guide blocks and continued movement of the panel 12 along the frame is accompanied by transverse movement away from the outer wall 23 so that the pressure on the seal 25 is relieved and the panel 12 moves from a position in alignment with the outer channel 20 to a position in alignment with the inner channel 21. The panel 12 can then be driven along the frame 10 to a selected position, for example to a position in substantially fully overlapped relation with the fixed panel 11.

During sliding of the movable panel 12 and its runners along the track provided by the frame 10, the lower and upper carriers 28 and 29 are held clear of the frame and of the linings in the frame by the runners. Accordingly, sliding of the movable panel is opposed only by friction between the runners and the linings. The materials of which these are formed, the dimensions of the inner channel 21, of the lining and of the runners are selected to provide the required friction. Furthermore, variations of these dimensions within tolerance limits can be accommodated by flexing of the limbs 34 and 35 to contract the space between them without giving rise to a jammed condition. Accordingly, dimensions and tolerance ranges can be selected to avoid free-play between the runners and the linings without risk of a jammed condition occurring in a case where the size of the channel provided by the lining 36 is the smallest size which falls within the corresponding tolerance range and the size of the runners is the largest which falls within the corresponding tolerance range.

The carrier 28 is preferably formed of a length of an extrusion. This extrusion preferably has a pair of grooves in opposite side walls of the carrier adjacent to the web and at the inside of the carrier. These grooves can receive the head portion 32 of the runners 30 and 31 so that the runners are a snap-fit in the carrier. Furthermore, the head portion of each runner will protrude slightly inside the carrier from the web thereof. This ensures that the edge of the panel 12 cannot seat firmly on the web of the carrier. The carrier is preferably secured on the marginal portion of the panel 12 by means of a bonding agent. The head portions of the runners ensure that the bonding agent cannot be squeezed entirely out of the interface between the edge of the panel and the web of the carrier. The runners are preferably fitted into the carrier prior to application of the carrier to the panel 12. By seating the head portions 32 of the runners on the edges of the panel 12, the distances which the runners project upwardly and downwardly from the panel can be predetermined within close tolerance limits. It is desirable to avoid freedom for significant vertical movement of the panel 12 relative to the frame 10, so that the panel 12 cannot twist about a horizontal axis during sliding. To this end, the end faces of the upper and lower frame parts can be machined, prior to assembly with each other, to achieve within close tolerance limits a predetermined distance between the web of the lining 36 and the web of the corresponding lining in the upper part of the frame. It will be understood that the tolerance limits for the length of the frame 10 can be somewhat broader without impairing operation of the window.

Drainage holes are pierced through the web 19 of the frame 10 to permit water to drain from the outer channel 20 to the peripheral channel 17, where there is between the gasket 14 and the web 19 the gap 18 along which the water can flow from the pierced drain holes towards the bottom corners of the frame. At the bottom corners, drain passages are provided between the frame 10 and the gasket 14. These passages are conveniently formed in the gasket during moulding of the corner portions thereof and one such drain passage is indicated at 42 in Figure 1. In a case where the same die is to be used to mould both bottom corners portions of the gasket, there may be three drain passages spaced apart around the corner. It will be noted that no drain holes in the lower part of the frame 10 are visible, once the window has been installed in a vehicle.

The window illustrated in the accompanying drawings may be incorporated in a structure other than a body of a vehicle. Furthermore, there may be used in place of one or each of the glazing panels 11 and 12 an opaque panel. In a case where the panels supported by the frame are opaque, the assembly is more properly described as a door assembly, than as a window. The movable panel, whether transparent or opaque, may be of a size such that, when the panel is in the open position, there is provided an opening through which a person can conveniently walk. In this case also, the assembly is more appropriately described as a door assembly, than as a window.

The features disclosed in the foregoing description or the following claims, or the accompanying drawings, expressed in their specific forms or in terms of a means for performing the disclosed function, or method or process for attaining the disclosed result, as appropriate, may, separately or in any combination of such features, be utilised for realising the invention in diverse forms thereof.

## Claims

1. A window or door assembly comprising a frame (10); first and second panels (11, 12) supported in the frame, at least one of said panels (12) being movable relative to the frame between open and closed positions; the frame providing a track along which the movable panel can be drawn between its open and closed positions; the track including respective portions (36, 37, 39, 40) which extend transversely of each other; and an elongated carrier (28) extending along a margin of the movable panel, characterised in that said carrier (28) is secured to the marginal portion of said movable panel (12) by a bonding agent, and further characterised by a plurality of runners (30, 31) fitted to the carrier, each runner (30, 31) projecting from the panel and the carrier into a channel provided by the track.

2. An assembly according to Claim 1 further characterised in that said carrier (28) is of generally U-section embracing said marginal portion of the movable panel (12), and said runners (30, 31) close openings in the carrier to retain said bonding agent in the carrier.

3. An assembly according to Claim 2 further characterised in that each of said runners (28) is a snap-fit in the carrier.

4. An assembly according to any one of the preceding claim further characterised in that each of said runners has a head portion (32) which abuts the edge of the panel.

5. An assembly according to any one of the preceding claims further characterised in that each of said runners comprises a hollow portion (33) which enters the channel of the track.

6. An assembly according to Claim 5 further characterised in that the hollow portion (33) of each runner includes two limbs (34, 35 separated by a gap.

7. An assembly according to any one of the preceding claims further characterised in that the frame defines a pair of channels (20, 21) which face towards the panels and are divided one from the other by a rib (22) which is parallel to major faces of the panels and wherein the rib (22) is interrupted by gaps through which the runners (30, 31) pass when the movable panel is moved between the open and closed positions.

8. An assembly according to Claim 7 further characterised by respective guide blocks (37, 38) disposed in said gaps in the rib, said guide blocks affording track parts (40) extending transversely of the frame.

9. An assembly according to any one of the preceding claims characterised in that it is a window assembly, incorporated in a vehicle body.

10. A window according to Claim 9 further characterised in that the frame is substantially upright when the vehicle is in use, and comprises two parts which meet one another at horizontally spaced positions (10a, 10b).

11. A window according to Claim 9 or Claim 10 further characterised in that said movable panel (12) moves generally horizontally between its open and closed positions.

12. A window according to any one of Claims 9 to 11 further characterised by a resilient gasket (14) interposed between the frame (10) and the vehicle body (43); a drainage duct (18) defined between a downwardly facing surface of the frame and an upwardly facing surface of the gasket, said duct extending substantially along the entire length of the frame; a drainage channel (42) defined between the gasket and frame, leading from the drainage duct to the space outside the vehicle body, and at least one aperture in the frame leading from the track to the drainage duct.

13. A window according to Claim 12 further characterised in that the drainage channel is short relative to the drainage duct.

## Patentansprüche

1. Fenster- oder Türbaugruppe, die einen Rahmen (10) umfaßt; eine erste und eine zweite in dem Rahmen gelagerte Scheibe (11, 12), wobei wenigstens eine der Scheiben (12) in bezug auf den Rahmen zwischen einer offenen und einer geschlossenen Stellung bewegt werden kann; wobei der Rahmen eine Bahn bildet, entlang derer die bewegliche Scheibe zwischen ihrer offenen und ihrer geschlossenen Stellung gezogen werden kann; wobei die Bahn entsprechende Abschnitte (36,37,38,39,40) einschließt, die sich quer zueinander erstrecken; sowie einen länglichen Träger (28), der über einen Rand der beweglichen Scheibe verläuft, **dadurch gekennzeich****net,** daß der Träger (28) mit einem Klebstoff an dem Randabschnitt der beweglichen Scheibe (12) befestigt ist, und des weiteren gekennzeichnet durch eine Vielzahl von an dem Träger angebrachten Läufern (30,31), wobei jeder Läufer (30,31) von der Scheibe und dem Träger in eine Rinne vorsteht, die durch die Bahn gebildet wird.

2. Baugruppe nach Anspruch 1, des weiteren **dadurch ge****kennzeichnet,** daß der Träger (28) im allgemeinen U-Querschnitt hat und den Randabschnitt der beweglichen Scheibe (12) umgibt, und die Läufer (30,31) Öffnungen in dem Träger verschließen, um den Klebstoff in dem Träger zu halten.

3. Baugruppe nach Anspruch 2, des weiteren **dadurch ge****kennzeichnet,** daß jeder der Läufer (28) in den Träger einschnappt.

4. Baugruppe nach einem der vorangehenden Ansprüche, des weiteren **dadurch gekennzeichnet,** daß jeder der Läufer einen oberen Abschnitt (32) hat, der an die Kante der Scheibe anstößt.

5. Baugruppe nach einem der vorangehenden Ansprüche, des weiteren **dadurch gekennzeichnet,** daß jeder der Läufer einen hohlen Abschnitt (32) umfaßt, der in die Rinne der Bahn eintritt.

6. Baugruppe nach Anspruch 5, des weiteren **dadurch ge****kennzeichnet,** daß der hohle Abschnitt (33) jedes Läufers zwei Schenkel (34, 35) enthält, die durch einen Spalt voneinander getrennt sind.

7. Baugruppe nach einem der vorangehenden Ansprüche, des weiteren **dadurch gekennzeichnet,** daß der Rahmen ein Paar Rinnen (20, 21) bildet, die den Scheiben zugewandt sind und voneinander durch eine Rippe (22) getrennt sind, die parallel zu Hauptflächen der Scheiben verläuft, wobei die Rippe (22) durch Spalte unterbrochen wird, durch die die Läufer (30,31) hindurchtreten, wenn die bewegliche Scheibe zwischen der offenen und der geschlossenen Stellung bewegt wird.

8. Baugruppe nach Anspruch 7, des weiteren **gekennzeichnet** **durch** entsprechende Führungsblöcke (37,38), die in den Spalten in der Rippe angeordnet sind, wobei die Führungsblöcke Bahnabschnitte (40) bilden, die quer zum Rahmen verlaufen.

9. Baugruppe nach einem der vorangehenden Ansprüche, **da****durch gekennzeichnet,** daß sie eine in eine Fahrzeugkarosserie integrierte Fensterbaugruppe ist.

10. Fenster nach Anspruch 9, des weiteren **dadurch gekenn****zeichnet,** daß der Rahmen im wesentlichen aufrechtstehend ist, wenn das Fahrzeug in Funktion ist, und er zwei Teile umfaßt, die an horizontal beabstandeten Stellen (10a, 10b) aufeinandertreffen.

11. Fenster nach Anspruch 9 oder Anspruch 10, des weiteren **dadurch gekennzeichnet,** daß sich die bewegliche Scheibe (12) im allgemeinen horizontal zwischen ihrer geöffneten und ihrer geschlossenen Stellung bewegt.

12. Fenster nach einem der Ansprüche 9 bis 11, des weiteren **gekennzeichnet durch** eine elastische Dichtungsleiste (14), die sich zwischen dem Rahmen (10) und der Fahrzeugkarosserie (43) befindet; eine Ablaufleitung (18), die von einer nach unten gewandten Fläche des Rahmens und einer nach oben gewandten Fläche der Dichtungsleiste gebildet wird, wobei die Leitung im wesentlichen über die gesamte Länge des Rahmens verläuft; einen Ablaufkanal (42), der zwischen der Dichtungsleiste und dem Rahmen gebildet wird und von der Ablaufleitung zu dem Raum außerhalb der Fahrzeugkarosserie führt, sowie wenigstens eine Öffnung in dem Rahmen, die von der Bahn zu der Ablaufleitung führt.

13. Fenster nach Anspruch 12, des weiteren **dadurch gekenn****zeichnet,** daß der Ablaufkanal in bezug auf die Ablaufleitung kurz ist.

## Revendications

1. Ensemble formant fenêtre ou porte comprenant un cadre (10) ; un premier et un deuxième panneaux (11, 12) supportés par le cadre, au moins l'un desdits panneaux (12) pouvant être déplacé par rapport au cadre entre des positions ouverte et fermée ; le cadre définissant une glissière le long de laquelle le panneau mobile peut être tiré entre ses positions ouverts et fermée ; la glissière incluant des parties respectives (36, 37, 39, 40) qui s'étendent transversalement les unes par rapport aux autres ; et un support allongé (28) s'étendant le long d'une limite du panneau mobile, caractérisé en ce que ledit support (28) est fixé à la partie limitrophe dudit panneau mobile (12) par un agent de liaison, et caractérisé en outre par une pluralité de patins (30, 31) attachés au support, chaque patin (30, 31) dépassant du panneau et du support dans une rainure définie par la glissière.

2. Ensemble selon la revendication 1, caractérisé en outre en ce que ledit support (28) a une section de forme générale en U entourant ladite partie limitrophe du panneau mobile (12), et lesdits patins (30, 31) ferment des ouvertures dans le support pour retenir ledit agent de liaison dans le support.

3. Ensemble selon la revendication 2, caractérisé en outre en ce que chacun desdits patins (28) est encliqueté dans le support.

4. Ensemble selon l'une quelconque des revendications précédentes, caractérisé en outre en ce que chacun desdits patins présente une partie formant tête (32) qui vient buter contre le bord du panneau.

5. Ensemble selon l'une quelconque des revendications précédentes, caractérisé en outre en ce que chacun desdits patins comprend une partie creuse (33) qui pénètre dans la rainure de la glissière.

6. Ensemble selon la revendication 5, caractérisé en outre en ce que la partie creuse (33) de chaque patin comprend deux branches (34, 35) séparées par un espace.

7. Ensemble selon l'une quelconque des revendications précédentes, caractérisé en outre en ce que le cadre définit une paire de rainures (20, 21) qui font face aux panneaux et sont séparées l'une de l'autre par une nervure (22) qui est parallèle aux faces principales des panneaux, et dans lequel la nervure (22) est interrompue par des espaces à travers lesquels passent les patins (30, 31) lorsque le panneau mobile est déplacé entre les positions ouverte et fermée.

8. Ensemble selon la revendication 7, caractérisé en outre par des blocs de guidage respectifs (37, 38) placés dans lesdits espaces à l'intérieur de la nervure, lesdits blocs de guidage fournissant des parties de glissière (40) s'étendant en travers du cadre.

9. Ensemble selon l'une quelconque des revendications précédentes, caractérisé en ce qu'il s'agit d'un ensemble formant fenêtre, intégré dans une carrosserie de véhicule.

10. Fenêtre selon la revendication 9, caractérisée en outre en ce que le cadre est essentiellement vertical lorsque le véhicule est utilisé, et comprend deux parties qui se rencontrent au niveau de positions espacées horizontalement (10a, 10b).

11. Fenêtre selon la revendication 9 ou à la revendication 10, caractérisée en outre en ce que ledit panneau mobile (12) se déplace généralement horizontalement entre ses positions ouverte et fermée.

12. Fenêtre selon l'une quelconque des revendications 9 à 11, caractérisée en outre par un joint d'étanchéité élastique (14) intercalé entre le cadre (10) et la carrosserie de véhicule (43) ; un conduit d'écoulement (18) défini entre une surface tournée vers le bas du cadre et une surface tournée vers le haut du joint d'étanchéité, ledit conduit s'étendant sensiblement sur toute la longueur du cadre ; une rainure d'écoulement (42) définie entre le joint d'étanchéité et le cadre, menant du conduit d'écoulement à l'espace à l'extérieur de la carrosserie de véhicule, et au moins une ouverture dans le cadre allant de la glissière au conduit d'écoulement.

13. Fenêtre selon la revendication 12, caractérisée en outre en ce que la rainure d'écoulement est courte par rapport au conduit d'écoulement.
